# EUROPEAN PATENT APPLICATION

(11) **EP 1 494 107 A2**
(43) Date of publication of application: **05.01.2005**
(21) Application number: 04102414.2
(22) Date of filing: 28.05.2004
(51) Int. Cl.: G06F 1/16, G06F 1/32

(54) **A computer having a display**

(30) Priority: 01.07.2003 KR 2003044389
(71) Applicant: Samsung Electronics Co., Ltd., Suwon-si, Gyeonggi-Do 442-742 (KR)
(72) Inventor: Park, Seong-geun, Suji-eup, Yongin city, Kyungki-do (KR)
(74) Representative: Read, Matthew Charles

(57) **Abstract**

A portable computer system and method include an auxiliary system (5) including a first wireless sending/receiving part (26); and a main system (3) including a data storing part (18) storing data, a second wireless sending/receiving part (46), a mounting part (20) mounting the auxiliary system (5) thereto, and a mounting sensing part (40) sensing whether the auxiliary system (5) is mounted on the mounting part (20), where when displaying the data of the main system (3) on a display part (50), the main system (3) transmits the data stored in the data storing part (18) to the auxiliary system (5) to process and to display the data on the display part (50), and when not displaying the data on the display part (50), the main system (3) supplies a signal to the switching part (16) to cut-off electric power to the auxiliary system (5) through the mounting part (20) or the first wireless sending/receiving part (26).

## Description

The present invention relates to a computer having a display and being movable between open and closed positions, said display not being visible to a user when the computer is in said closed position.

In contrast to desktop computers, portable computers such as laptops, notebook computers and palmtop computers offer user's mobility.

PDAs (Personal Digital Assistants) are used to effectively manage personal information. More specifically, a known type of PDA has a function called PIMS (Personal Information Management System), which helps a user to conduct personal business, and includes at least a name and address database, a to-do list and a note taker.

Furthermore, PDAs can support multimedia functions and can be used to play computer games, to store digital still images, to listen to music, to reproduce moving picture files and can communicate data with a desktop PC.

However, PDAs have a limited RAM (Random Access Memory) capacity, which causes a problem when they are used to handle multimedia files. Furthermore, a cable is often required for a PDA to communicate data with a desktop PC, thereby making it impossible for a user to operate the desktop PC when mobility is needed.

Notebook computers can also perform the functions of PDAs, but it is very inconvenient to use notebook computers as PDAs when a user requires mobility. For example, even when a notebook computer is only used to read an e-mail, access a multimedia file or to conduct simple business such as PIMS, a user must open a display panel of the notebook computer and boot up the notebook computer, which is undesirably time consuming and wastes electrical power.

A computer, according to the present invention, characterised by an auxiliary computer device docking station for bodily receiving an auxiliary computer device, wherein the computer is configured to transmit display control signals via the docking station.

Preferably, a computer system comprises said computer and an auxiliary computer device having a display, wherein the auxiliary computer device is configured to display images on its display in dependence on display control signals received via the docking station, so as to function as an auxiliary display for the computer. More preferably, the auxiliary computer device is a PDA.

Preferably, a method of operation of said computer comprises detecting an auxiliary computer device in said docking station and transmitting display control signals to the auxiliary computer device via said docking station.

More preferably, the method comprises, after detecting an auxiliary computer device in said docking station, displaying a confirmation request message on a display of said auxiliary computer device and transmitting display control signals in dependence on a user response to said confirmation request message. Even more preferably, the method is performed when the computer is in said closed position.

Embodiments of the present invention will now be described, by way of example, with reference to the accompanying drawings, in which:
Figure 1 is a perspective view of an example of a portable computer system according to the present invention;
Figure 2 is a perspective view of another example of a portable computer system according to the present invention;
Figure 3 is a block diagram of the portable computer systems of Figures 1 and 2;
Figure 4 is a flowchart showing an example of a control method for a portable computer system according to the present invention; and
Figure 5 is a flowchart showing another branch of the control method shown in Figure 4.

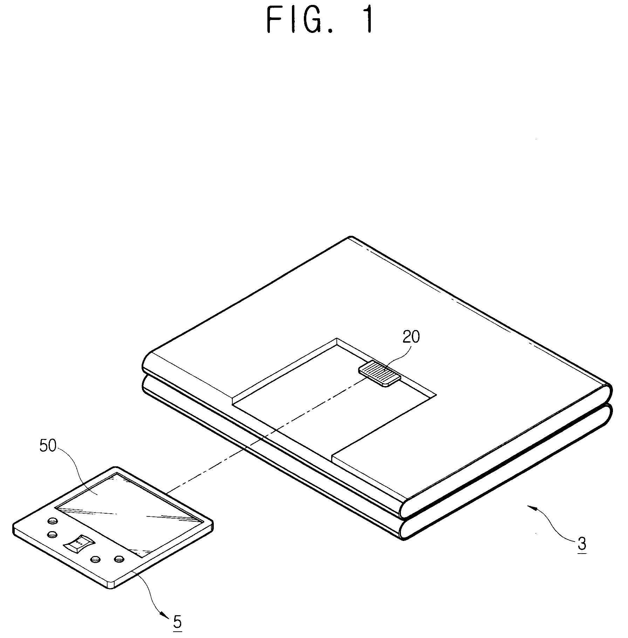

Referring to Figure 1, a mounting part 20 is disposed on a side of the casing of the portable computer for mounting an auxiliary system 5 thereto. Thus, the auxiliary system 5 can be carried with the portable computer.

The auxiliary system 5 may be an embedded system having an operating system independent of a main system 3 of the portable computer and may include memory, a battery, a display part 50 and the like.

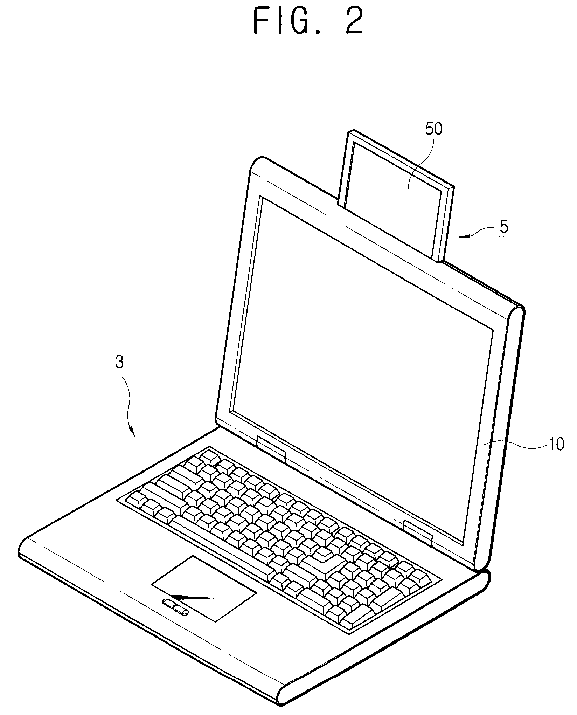

Referring to Figure 2, the mounting part 20 may be disposed such that the display part 50 of the auxiliary system 5 protrudes from an upper part of a display panel 10 of the main system 3. Otherwise, the mounting part 20 may be arranged such that the display part 50 of the auxiliary system 5 faces backwards.

The display part 50 of the auxiliary system 5 may display an operating panel of a multimedia file player when the display panel 10 is opened, i.e. the display part 50 may serve as an additional display part of the main system 3.

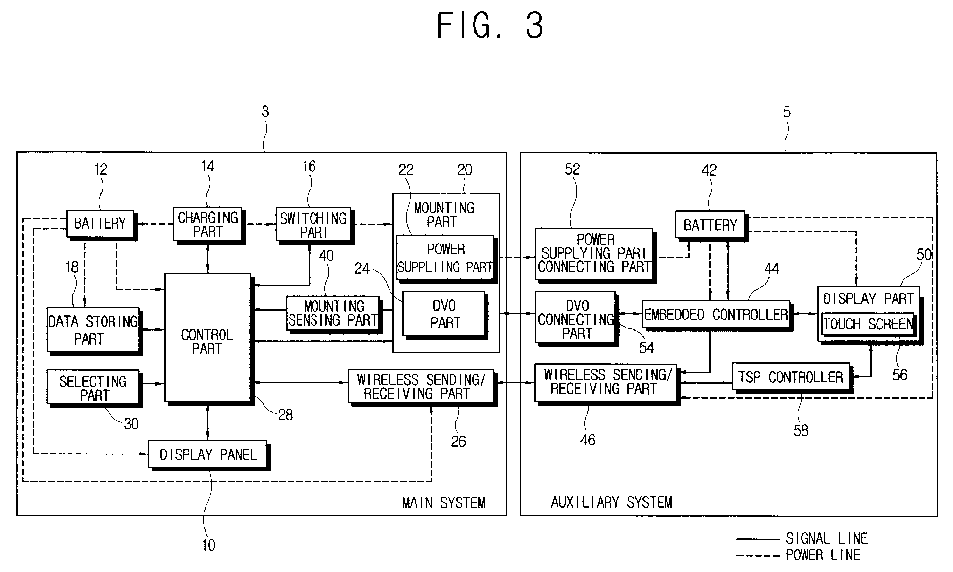

Referring to Figure 3, the portable computer system comprises a main system 3 including a battery 12, a charging part 14 to charge the battery 12, a data storing part 18, a display panel 10 and the mounting part 20 for mounting the auxiliary system 5 thereto and for sending/receiving data to/from the auxiliary system 5. A mounting sensing part 40 in the main system 3 determines whether the auxiliary system 5 is mounted to the mounting part 20 of the main system 3, a wireless sending/receiving part 26 wirelessly communicates with the auxiliary system 5, a selecting part 30 selects whether the data in the data storing part 18 is displayed on the display part 50 of the auxiliary system 5 and a switching part 16 supplies/cuts-off electric power from the charging part 14 to the auxiliary system 5. A control part 28 in the main system 3 controls the portable computer system.

The auxiliary system 5 comprises a battery 42 for supplying electric power, the display part 50 for displaying data and which has a touch screen 56, a TSP (Touch Screen Panel) controller 58 for processing signals input by a user using the touch screen 56 of the display part 50, a wireless sending/receiving part 46 to wirelessly communicate with the main system 3 and an embedded controller 44 to control the auxiliary system 5.

The battery 12 supplies the electric power necessary to operate the components of the portable computer. The control part 28 controls the supply of electric power from the charging part 14 to the battery 12, in response to a signal from a sensing part indicating the remaining capacity of the battery 12.

The auxiliary system 5 may be mounted on the mounting part 20 and the mounting part 20 may include a DVO (Digital Video Output) port 24 and a power supplying port 22. In the auxiliary system 5 there is provided a DVO port connecting part 54 and a power supplying port connecting part 52 for connecting to the DVO (Digital Video Output) port 24 and the power supplying port 22 respectively.

The mounting sensing part 40 includes a circuit for generating an electrical signal when the auxiliary system 5 is mounted on the mounting part 20 of the main system 3. The mounting sensing part 40 generates two different signals depending on whether the auxiliary system 5 is mounted on the main system 3 and supplies the signals to the control part 28.

The wireless sending/receiving part 26 of the main system 3 and the wireless sending/receiving part 46 of the auxiliary system 5 may interface using Bluetooth or any type of UWB (ultra wideband) interface. The main system 3 and the auxiliary system 5 can wirelessly communicate with each other by means of their respective wireless sending/receiving parts 26, 46. Furthermore, the main system 3 can be connected to web-servers and serve as a web-browser using the wireless sending/receiving part 26.

In a variant of the present invention, the wireless sending/receiving part 46 of the auxiliary part 5 is configured to only communicate data between the auxiliary part 5 and the main system 3, so that the auxiliary system 5 cannot be connected to web-servers using the wireless sending/receiving part 46 of the auxiliary system 5. In this case, the auxiliary system 5 can only serve as a web-browser by using the wireless sending/receiving part 26 of the main system 3.

In another variant of the present invention, the auxiliary system 5 may be constructed so that the auxiliary system 5 can be connected to web-servers using the wireless sending/receiving part 46 of the auxiliary system 5 and serve as a stand-alone web-browser.

The selecting part 30 selects whether the data of the main system 3 is displayed on the display part 50 of the auxiliary system 5 or on the display panel of the main system 3 and may be in the form of a predetermined button, a hot key or a selecting program.

A selecting program may be used such that, when the switch of the auxiliary system 5 is turned on and a power supplying signal is transmitted from the auxiliary system 5 through the mounting part 20 or the wireless sending/receiving part 26 to the main system 3, the control part 28 of the main system 3 senses the power supplying signal and operates the selecting program.

The switching part 16 is electrically connected to the charging part 14 and the power supplying port 22 of the mounting part 20, so as to control the supply of the electric power from the charging part 14 to the auxiliary system 5 through the power supplying port 22.

The control part 28 determines whether the auxiliary system 5 is mounted on the mounting part 20 in response to a mounting sensing signal generated by the mounting sensing part 40. When it is determined that the auxiliary system 5 is mounted, the control part 28 turns on the switching part 16 so that electric power from the charging part 14 is supplied to the battery 42 of the auxiliary system 5 through the power supplying port 22.

When a user selects to display the data of the main system 3 on the display part 50 of the auxiliary system 5, the control part 28 transmits data stored in the data storing part 18 to the auxiliary system 5 through the DVO port 24. Then, the embedded controller 44, which stores a graphic controller of the auxiliary system 5, processes the data of the main system 3 transmitted through the DVO port 24 in a signal processing part (not shown) and displays the data of the main system 3 on the display part 50.

When a user selects not to display data of the main system 3 on the display part 50 of the auxiliary system 5, the control part 28 supplies a signal to cut-off power to the auxiliary system 5 using one of the mounting part 20 and the wireless sending/receiving part 26.

The embedded controller 44 of the auxiliary system 5 controls the battery 42 in response to the signal to cut-off power and turns-off the electric power to the display part 50 of the auxiliary system 5, thereby reducing unnecessary power consumption when the user does not want to display data on the display part 50 of the auxiliary system 5.

When it is determined that the auxiliary system 5 is not mounted, the control part 28 turns-off the switching part 16 and stops charging the battery 42 of the auxiliary system 5, thereby preventing a current leakage to the charging part 14.

When a user selects to display data of the main system 3 on the display part 50 of the auxiliary system 5, the control part 28 reads the data stored in the data storing part 18 and transmits the data to the auxiliary system 5 using the wireless sending/receiving part 26.

When a user selects not to display data of the main system 3 on the display part 50 of the auxiliary system 5, the control part 28 supplies an operating signal corresponding to a PDA (Personal Digital Assistant) mode to the auxiliary system 5 using the wireless sending/receiving part 26.

The embedded controller 44 of the auxiliary system 5 to which the operating signal of the PDA mode is supplied determines whether the wireless sending/receiving part 26 of the main system 3 is turned on/off. When it is determined that the wireless sending/receiving part 26 of the main system 3 is turned on, the embedded controller 44 controls the auxiliary system 5 to operate in a web-pad mode, such as a web-browser, using the wireless sending/receiving part 26, in response to an user input made using the touch screen 56 of the auxiliary system 5.

When it is determined that the wireless sending/receiving part 26 of the main system 3 is turned off, the embedded controller 44 controls the auxiliary system 5 to operate in the PIMS mode. Here, the auxiliary system 5 can serve in the PIMS mode.

Thus, the data of the main system 3 can be displayed on the display part 50 of the auxiliary system 5 without opening the portable computer, so that the user can speedily process data even while the user is in motion and the auxiliary system 5 can be used as a web-pad through the wireless sending/receiving part 26. The auxiliary system 5 can be operated in the PIMS mode such as data recording, reproducing and displaying machines.

A signal input through the touch screen 56 of the auxiliary system 5 is received by the TSP controller 58 and then transmitted to the control part 28 of the main system 3 using the wireless sending/receiving parts 26, 46, thereby enabling the main system 3 to be controlled using the touch screen 56 of the auxiliary system 5.

Herein, the input device of the auxiliary system 5 is described as the touch screen 56, but it is not limited thereto.

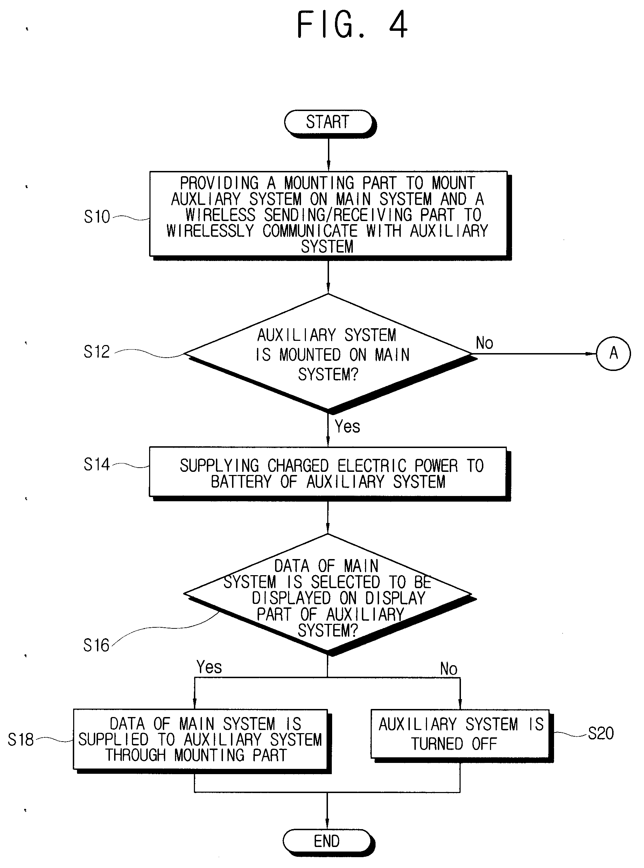

A control method for the portable computer system described above will now be described with reference to Figure 4. At operation S10, the mounting part 20, for mounting the auxiliary system 5 thereto and the wireless sending/receiving part 26, for wirelessly communicating with the auxiliary system 5, are provided in the main system 3. At operation S12, the control part 28 determines whether the auxiliary system 5 is mounted on the main system 3 in response to a signal from the mounting sensing part 40. At operation S14, when it is determined that the auxiliary system 5 is mounted on the main system 3, the control part 28 controls the charging part 14 to supply electric power to the battery 42 of the auxiliary system 5. At operation S16, when the user selects to display the data of the main system 3 on the display part 50 of the auxiliary part 5, using the selecting part 30, at operation S18, the control part 28 controls the data stored in the data storing part 18 to be supplied to the auxiliary system 5 using the mounting part 20. At operation S16, when the user selects not to display the data of the main system 3 on the display part 50 of the auxiliary system 5, the control part 28 controls the embedded controller 44 to cut-off the supply of electric power to the auxiliary system 5 using the wireless sending/receiving part 26 or the mounting part 20. Then, at operation S20, the embedded controller controls the battery 42 to cut-off the supply of electric power to the auxiliary system 5.

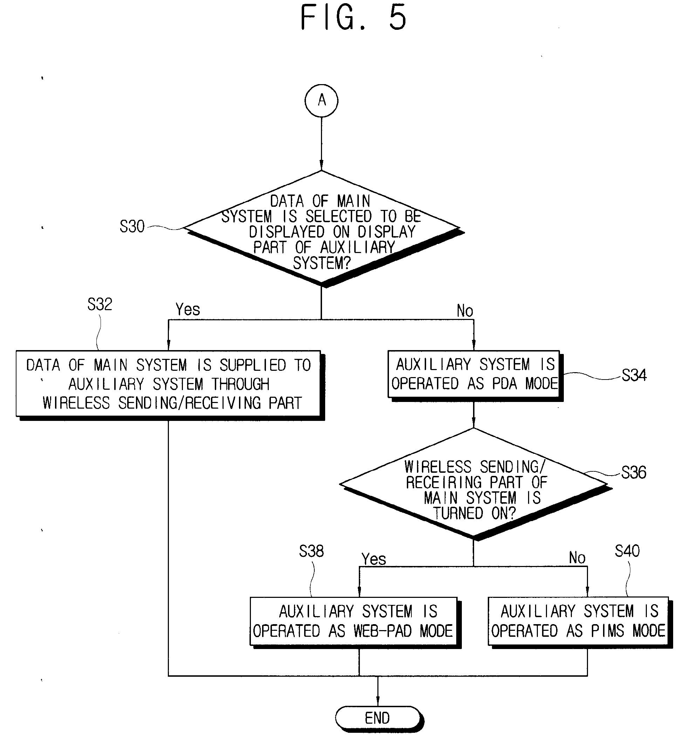

Referring to Figure 5, when the auxiliary system 5 is not mounted on the main system 3, at operation S30, when the user selects to display the data of the main system 3 on the display part 50 of the auxiliary system 5, at operation S32, the control part 28 reads the data stored in the data storing part 18 and supplies the data to the auxiliary system 5 using the wireless sending/receiving part 26. Thus, the data of the main system 3 is displayed on the display part 50 of the auxiliary system 5.

In contrast, at operation S30, when the user selects not to display the data of the main system 3 on the display part 50 of the auxiliary system 5, at operation S34, the control part 28 supplies a PDA operating mode signal to the embedded controller 44 using the wireless sending/receiving part 26 and controls the auxiliary system 5 to operate in the PDA mode.

Subsequently, at operation S36, the embedded controller 44 determines whether the wireless sending/receiving part 26 of the main system 3 is turned on/off. When it is determined that the wireless sending/receiving part 26 of the main system 3 is turned on, at operation S38, the embedded controller 44 controls the auxiliary system 5 to operate in the web-pad mode. When it is determined that the wireless sending/receiving part 26 of the main system 3 is turned off, at operation S40, the embedded controller 44 controls the auxiliary system 5 to operate in the PIMS mode.

In the embodiment described above, the data of the main system 3 is supplied to the auxiliary system 5 using the mounting part 20, when the auxiliary system 5 is mounted on the main system 3. However, in a variant of the present invention, the auxiliary system 5 and the main system 3 may be connected by a cable, thereby enabling the sending/receiving of data between the auxiliary system 5 and the main system 3.

In the exemplary control method described above, the auxiliary system 5 is operated in the PIMS mode at operation S40, on the conditions that the auxiliary system 5 is not mounted on the main system 3, the user selects not to display the data of the main system 3 on the display part 50 of the auxiliary system 5 and the wireless sending/receiving part 26 of the main system 3 is turned off. However, in an variant of the present invention, the web-pad mode may be automatically switched to the PIMS mode by a user setting, if the auxiliary system 5 is not mounted on the main system 3.

In another variant of the present invention, the data of the main system 3 is supplied to the auxiliary system 5 using the mounting part 20 or the wireless sending/receiving part 26, regardless of whether the auxiliary system 5 is mounted on the main system 3 or not, so that the user can speedily process data even while the user is in motion

As described above, a portable computer and a control method thereof, in which data stored in a main system is displayed on the display part of an auxiliary system, so that the user can speedily process data even while the user is in motion, is provided.

Furthermore, a portable computer and a control method thereof, in which an auxiliary system serves as a web-pad using a network interface of a main system or operates in a PIMS mode is provided.

Moreover, a portable computer and a control method thereof, in which a main system can be controlled using an input device of an auxiliary system is provided.

The portable computer system implementing the method described above includes permanent or removable storage, such as an application specific integrated circuit (ASIC), magnetic and optical discs, RAM, ROM, etc. on which the process and data structures of the present invention can be stored and distributed. The processes can also downloaded over a network such as the Internet.

## Claims

1. A computer (3) having a display (10) and being movable between open and closed positions, said display (10) not being visible to a user when the computer (3) is in said closed position, **characterised by** an auxiliary computer device docking station (20) for bodily receiving an auxiliary computer device (5), wherein the computer (3) is configured to transmit display control signals via the docking station (20).

2. A computer system comprising a computer according to claim 1 and an auxiliary computer device (5) having a display (50), wherein the auxiliary computer device (5) is configured to display images on its display (50) in dependence on display control signals received via the docking station (20), so as to function as an auxiliary display for the computer (3).

3. A computer system according to claim 3, wherein the auxiliary computer device (5) is a PDA.

4. A method of operation of a computer according to claim 1, the method comprising:
detecting an auxiliary computer device (5) in said docking station (20); and
transmitting display control signals to the auxiliary computer device (5) via said docking station (20).

5. A method according to claim 4, comprising:
after detecting an auxiliary computer device (5) in said docking station (20), displaying a confirmation request message on a display (50) of said auxiliary computer device (5); and
transmitting display control signals in dependence on a user response to said confirmation request message.

6. A method according to claim 4 or 5, performed when the computer (3) is in said closed position.

7. A computer programmed to perform a method according to claim 4, 5, or 6.

8. A signal representing a computer program for programming a computer to provide a computer according to claim 7.

9. A data carrier having a signal according to claim 8 recorded therein or thereon.

10. A portable computer system, comprising:
an auxiliary system comprising
a display part, and
a first wireless sending/receiving part; and
a main system comprising
a display panel,
a data storing part storing data,
a second wireless sending/receiving part,
a mounting part mounting the auxiliary system thereto,
a mounting sensing part sensing whether the auxiliary system is mounted on the mounting part, and
a switching part supplying electric power to the auxiliary system when the mounting sensing part senses that the auxiliary system is mounted on the mounting part, wherein
data of the main system is supplied to the auxiliary system wirelessly, through the first and second wireless sending/receiving parts, or through the mounting part,
when displaying the data of the main system on the display part of the auxiliary system, the main system transmits the data stored in the data storing part to the auxiliary system to process and to display the data of the main system on the display part, and
when not displaying the data of the main system on the display part, the main system supplies a signal to the switching part to cut-off the electric power to the auxiliary system through the mounting part or the first wireless sending/receiving part.

11. The portable computer system as recited in claim 10, wherein the auxiliary system is connected to web-servers through the first wireless sending/receiving part or the second wireless sending/receiving part.

12. The portable computer system as recited in claim 10, wherein the auxiliary system further comprises:
a battery, and
an embedded controller controlling the battery of the auxiliary system according to the signal from the main system to cut-off the electric power and turns-off the electric power of the display part to reduce unnecessary power consumption when not displaying the data on the display part.

13. The portable computer system as recited in claim 12, wherein the main system further comprises:
a charging part, and
a control part reading the data stored in the data storing part and transmitting the data to the auxiliary system through the second wireless sending/receiving part when displaying the data of the main system on the display part, or supplying an operating signal of a PDA (Personal Digital Assistant) mode to the auxiliary system through the second wireless sending/receiving part when not displaying the data of the main system on the display part.

14. The portable computer system as recited in claim 13, wherein, when sensing that the auxiliary system is not mounted, the main system turns-off the switching part and stops charging the battery of auxiliary system to prevent a current leakage to the charging part.

15. The portable computer system as recited in claim 12, wherein display part of the auxiliary system comprises:
a TSP (Touch Screen Panel) screen receiving a user input-signal, and
a TSP controller to process the user input-signal through the touch screen, wherein when the embedded controller determines that the second wireless sending/receiving part of the main system is turned on, the embedded controller controls the auxiliary system to serve as a web-pad mode, according to the user input-signal.

16. The portable computer system as recited in claim 12, wherein when the embedded controller determines that the second wireless sending/receiving part of the main system is turned off, the embedded controller controls the auxiliary system to operate in a PIMS (Personal Information Management System) mode.

17. The portable computer system as recited in claim 13, wherein the auxiliary system further comprises:
a DVO (Digital Video Output) port connecting part, and
a power supplying port connecting part connected to the DVO port and the power supplying port.

18. The portable computer system as recited in claim 10, wherein the second wireless sending/receiving part of the main system and the first wireless sending/receiving part of the auxiliary system each comprises Blue Tooth or a UWB (ultra wideband) interface.

19. The portable computer system as recited in claim 13, wherein the mounting sensing part generates an electric signal when the auxiliary system is mounted on the mounting part of the main system and supplies the signal to the control part.

20. The portable computer system as recited in claim 10, wherein the auxiliary system provides wireless access to the main system to web-servers and to serve as a web-browser.

21. The portable computer system as recited in claim 10, wherein the auxiliary system is connected to web-servers through the first wireless sending/receiving part of the auxiliary system to serve as a stand-alone web-browser.

22. The portable computer system as recited in claim 17, wherein the switching part is electrically connected to the charging part and the power supplying port of the mounting part to supply/cut-off the electric power charged in the charging part to the auxiliary system and through the power supplying port.

23. The portable computer system as recited in claim 10, wherein the main part further comprises:
a selecting part selecting whether the data in the data storing part is displayed on the display part of the auxiliary system or on the display panel of the main system.

24. The portable computer system as recited in claim 23, wherein the selecting part comprises a predetermined button, a hot key, or a selecting program, wh ere if the auxiliary system is mounted on the mounting part and is turned on, and a power supplying signal is transmitted from the auxiliary system through the mounting part or the second wireless sending/receiving part to the main system, the main system senses the power supplying signal and operates the selecting program.

25. The portable computer system as recited in claim 13, wherein the control part determines whether the auxiliary system is mounted based on a mounting sensing signal generated from the mounting sensing part.

26. A portable computer, comprising:
an auxiliary system comprising a first wireless sending/receiving part and a display part;
a second wireless sending/receiving part; and
a mounting part on a side of a casing to mount the auxiliary system, wherein data of the main system is supplied to the auxiliary system wirelessly, through the first and second wireless sending/receiving parts, or through the mounting part.

27. The portable computer as recited in claim 26, further comprising:
a display panel, wherein the display part of the auxiliary system displays an operating panel of a multimedia file when the display panel is opened to serve as an additional display part of the portable computer.

28. The portable computer as recited in claim 26, wherein the auxiliary system is an embedded controller having an operating system independent of the portable computer.

29. The portable computer as recited in claim 28, wherein the embedded controller controls the auxiliary system to serve as a web-pad mode or to operate in a PIMS mode according to whether the second wireless sending/receiving part of the main system is turned on.

30. The portable computer as recited in claim 26, wherein the auxiliary system and the main system are connected through a predetermined cable to send/receive data between the auxiliary system and the main system.

31. A method of controlling a portable computer system comprising an auxiliary system comprising a display part and a first wireless sending/receiving part, and a main system comprising a display panel, a second wireless sending/receiving part, a mounting part mounting the auxiliary system thereto, the method comprising:
allowing wireless communication between the main system and the auxiliary system through the wireless sending/receiving part;
determining whether the auxiliary system is mounted on a mounting part of the main system;
supplying electric power to the auxiliary system when mounted on the main system;
transmitting the data stored in the main system to the auxiliary system to process and to display the data of the main system on the display part when a user selects to display the data on the display part; and
cutting-off the electric power to the auxiliary system through the mounting part or the first wireless sending/receiving part when the user selects not to display the data of the main system on the display part.

32. The method as recited in claim 31, when the user selects to display the data of the main system on the display part of the auxiliary system, the main system reads the data stored therein and supplies the data to the auxiliary system through the second wireless sending/receiving part.

33. The method as recited in claim 31, when the user selects not to display the data of the main system on the display part of the auxiliary system, the main system supplies a PDA (Personal Digital Assistant) operating mode signal to the auxiliary system through the second wireless sending/receiving part and controls to operate the auxiliary system in the PDA mode.

34. The method as recited in claim 31, further comprising:
determining whether the second wireless sending/receiving part of the main system is turned on/off.

35. The method as recited in claim 34, the method further comprising:
controlling the auxiliary system to operate in a web-pad mode when the second wireless sending/receiving part is turned on and the auxiliary system is mounted on the mounting part of the main system.

36. The method as recited in claim 34, the method further comprising:
controlling the auxiliary system to operate in a PIMS (Personal Information Management System) mode when the second wireless sending/receiving part is turned off and the auxiliary system is not mounted on the mounting part of the main system.

37. The method as recited in claim 34, the method further comprising:
automatically transforming a web-pad mode to a PIMS (Personal Information Management System) mode through a user setting when the auxiliary system is not mounted on the mounting part of the main system.

38. A portable computer capable of receiving an auxiliary system comprising a first wireless sending/receiving part and a display part, the portable computer comprising:
a second wireless sending/receiving part;
a mounting part on a side of a casing to receive the auxiliary system;
a selecting part selecting whether the data of the main system is displayed on the display part; and
a controller reading data of the main system and transmitting the data to the auxiliary system when displaying the data of the main system on the display part, or supplying an operating signal of a PDA (Personal Digital Assistant) mode to the auxiliary system when not displaying the data of the main system on the display part,
wherein data of the main system is supplied to the auxiliary system wirelessly, through the first and second wireless sending/receiving parts, or through the mounting part.

39. A portable computer system, comprising:
an auxiliary system comprising a display part and an embedded controller; and
a main system comprising
a display panel,
a data storing part storing data,
a mounting part mounting the auxiliary system thereto,
a mounting sensing part sensing whether the auxiliary system is mounted on the mounting part, and
a switching part supplying electric power to the auxiliary system when the mounting sensing part senses that the auxiliary system is mounted on the mounting part, wherein the embedded controller controls the auxiliary system to serve as a web pad mode or to operate in a PIMS mode according to whether the second wireless sending/receiving part of the main system is turned on.

40. A computer readable storage medium controlling a computer and comprising a process of controlling a portable computer system which comprises an auxiliary system, which comprises a display part and a first wireless sending/receiving part, and a main system, which comprises a display panel, a second wireless sending/receiving part, a mounting part mounting the auxiliary system thereto, the process comprising:
allowing wireless communication between the main system and the auxiliary system through the wireless sending/receiving part;
determining whether the auxiliary system is mounted on a mounting part of the main system;
supplying electric power to the auxiliary system when mounted on the main system;
transmitting the data stored in the main system to the auxiliary system to process and to display the data of the main system on the display part when a user selects to display the data on the display part; and
cutting-off the electric power to the auxiliary system through the mounting part or the first wireless sending/receiving part when the user selects not to display the data of the main system on the display part.
